# EUROPEAN PATENT APPLICATION

(11) **EP 1 992 670 A1**
(43) Date of publication of application: **19.11.2008**
(21) Application number: 07707486.2
(22) Date of filing: 26.01.2007
(51) Int. Cl.: C09D 11/00, B41J 2/01, B41M 5/00

(54) **NONAQUEOUS INK-JET INK AND METHOD OF INK-JET RECORDING**

(30) Priority: 07.03.2006 JP 2006060749
(71) Applicant: Konica Minolta IJ Technologies, Inc., Hino, Tokyo 191-8511 (JP)
(72) Inventor: OHKUBO, Kenichi, Hino-shi, Tokyo 191-8511 (JP); KAGA, Makoto, Hino-shi, Tokyo 191-8511 (JP); KATO, Hisato, Hino-shi, Tokyo 191-8511 (JP)
(74) Representative: McCluskie, Gail Wilson
(86) International application number: PCT/JP2007/051254
(87) International publication number: WO 2007/102285

(57) **Abstract**

A nonaqueous ink-jet ink comprising at least solvents (A) and (B) cited below, a pigment, and a polymer compound, wherein the content of solvent (A) is 3 - 15% by weight based on the total weight of the ink-jet ink, and the content of solvent (B) is 50 - 90% by weight: Solvent (A): 1,3-dimethyl-2-imidazolidinone; Solvent (B): a solvent comprising at least one compound selected from the group consisting of the compounds represented by following Formulas (1) and (2): Formula (1) **R¹-(OX¹)₂-O-R²,** and Formula (2)

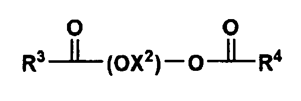

## Description

### TECHNICAL FIELD

The present invention relates to a novel nonaqueous ink-jet ink and an ink-jet recording method.

### BACKGROUND

In recent years, since ink-jet recording systems enable simple image formation at low cost, they have been applied to various printing fields such as photography, various types of printing, marking, and particular printing such as color filters.

Ink-jet inks, employed in the above ink-jet recording systems, include a plurality of inks such as an aqueous ink which employs water as a major solvent, an oil-based ink which employs nonvolatile solvents as a major solvent, a hotmelt ink which is solid at room temperature and is applied to printing while heated and molten, and an actinic radiation curable ink which is cured via actinic radiation such as light, and each of them is appropriately selected depending on the intended application.

Further, widely employed are soft polyvinyl chloride recording media such as outdoor billboards requiring weather resistance over a long period or printed matter required for close adhesion onto materials having curved surfaces. A plurality of methods is employed to achieve printing onto soft polyvinyl chloride. Of these, the ink-jet recording method is employable as a method which requires no plate making, shortens the period till finishing, and is suitable for low volume high-mix production.

When ink-jet recording is applied onto the soft polyvinyl chloride, solvent inks, incorporating a relatively large amount of cyclohexanone and the like, have been employed as an ink-jet ink. For example, ink incorporating cyclohexanone is disclosed (refer to Patent Document 1). Solubility of soft polyvinyl chloride in cyclohexanone is relatively high, and pigments in an ink-jet ink penetrate the soft polyvinyl chloride, whereby desired abrasion resistance and glossiness are achievable. However, cyclohexanone, which is designated as a Second Class Organic Solvent, presents not only safety problems but also requires installation of localized air exhaust apparatus.

In response to the above, solvent inks which are characterized in incorporating no cyclohexanone have been developed and have been commercially available. Such solvent inks have been developed which incorporate solvents such as N-methylpyrrolidone and amide instead of cyclohexanone with the above problems (refer to Patent Documents 2 and 3). By employing the above inks, it has been possible to prepare ink-jet inks which reduce unpleasant odors to some extent and exhibit abrasion resistance against polyvinyl chloride. However, when the above ink-jet inks were employed for an extended period of time, new problems were found, in which ink-jet heads exhibited abnormalities, and it gradually became impossible to form normal images.

At present, it is impossible to prepare a nonaqueous ink-jet ink which results in no problem of safety and odor, exhibits sufficient suitability to achieve printing onto polyvinyl chloride, and enables stable use over an extended duration.
Patent Document 1: Japanese Translation of PCT International Application No. 2002-526631
Patent Document 2: Unexamined Japanese Patent Application Publication No. (hereinafter referred to as JP-A) 2005- 15672
Patent Document 3: JP-A 2005-60716

### DISCLOSURE OF THE INVENTION

### PROBLEMS TO BE SOLVED BY THE INVENTION

In view of the foregoing, the present invention was achieved. An object of the present invention is to provide a nonaqueous ink-jet ink which excels in printing suitability (quick drying and abrasion resistance) onto polyvinyl chloride, ejection stability, and safety, results in no odor problem, and enables stable use without causing abnormality of ink-jet heads during use of an extended period, as well as an ink-jet recording method employing the same.

### MEANS TO SOLVE THE PROBLEMS

The above object of the present invention is achievable via the following embodiments.
Item 1. A nonaqueous ink-jet ink comprising at least solvents (A) and (B) cited below, a pigment, and a polymer compound,
   wherein a content of aforesaid solvent (A) is 3 - 15% by weight based on the total weight of the ink-jet ink, and a content of aforesaid solvent (B) is 50 - 90% by weight.
   Solvent (A): 1,3-dimethyl-2-imidazolidinone
   Solvent (B): a solvent comprising at least one compound selected from the group consisting of compounds represented by following Formulas (1) and (2):

   Formula (1) **R¹-(OX¹)₂-O-R²**

   wherein R¹ is a methyl group or an ethyl group, R² is a methyl group or an ethyl group, and OX¹ is an oxyethylene group or an oxypropylene group; 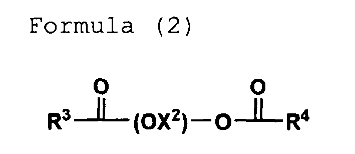 wherein R³ is a methyl group or an ethyl group, R⁴ is a methyl group or an ethyl group, and OX² is an oxyethylene group or an oxypropylene group.
Item 2. The nonaqueous ink-jet ink as described in item 1 above,
   wherein the content of aforesaid solvent (A) is 5 - 10% by weight based on the total weight of the ink-jet ink.
Item 3. The nonaqueous ink-jet ink as described in item 1 or 2 above,
   wherein aforesaid solvent (B) incorporates at least the compound represented by Formula (1).
Item 4. The nonaqueous ink-jet ink as described in any one of items 1 - 3 above,
   wherein aforesaid solvent (B) incorporates at least one selected from the group consisting of diethylene glycol diethyl ether, dipropylene glycol dimethyl ether, dipropylene glycol diethyl ether, ethylene glycol diacetate, and propylene glycol diacetate.
Item 5. The nonaqueous ink-jet ink as described in any one of items 1 - 4 above,
   wherein aforesaid solvent (B) incorporates at least diethylene glycol diethyl ether and ethylene glycol diacetate.
Item 6. The nonaqueous ink-jet ink as described in item 5 above,
   wherein the content ratio of diethylene glycol diethyl ether to ethylene glycol diacetate is 1 : 1 - 10 : 1.
Item 7. An ink-jet recording method comprising the step of:
   ejecting the nonaqueous ink-jet ink described in any one of items 1 - 6 above, onto polyvinyl chloride as a recording medium.

### EFFECTS OF THE INVENTION

Based on the present invention, it becomes possible to provide a nonaqueous ink-jet ink which excels in printing suitability (quick drying and abrasion resistance) onto polyvinyl chloride, ejection stability, and safety, results in no odor problem, and enables stable use without causing abnormality of ink-jet heads during use of an extended period, and an ink-jet recording method employing the same.

### BEST MODE TO CARRY OUT THE INVENTION

The optimal embodiments to practice the present invention will now be detailed.

In view of the aforesaid problems, the inventors of the present invention conducted diligent investigations, and discovered the following to achieve the present invention. By employing a nonaqueous ink-jet ink incorporating at least aforesaid solvent (A), aforesaid solvent (B), a pigment, and a polymer compound, which is charactgerized in that the content of aforesaid solvent (A) is 3 - 15% by weight, the content of aforesaid solvent (B) is 50 - 90% by weight, it was possible to realize an nonaqueous ink-jet ink which excelled in printing suitability (quick drying and abrasion resistance) onto polyvinyl chloride, ejection stability, and safety, resulted in no odor problem, and enabled stable use without causing abnormality of ink-jet heads during use of an extended period.

Namely, the inventors of the present intention conducted various investigations with regard to nonaqueous ink-jet inks, and found the following problem. Prior art nonaqueous ink jet inks incorporating solvents such as N-methylpyrrolidone and amide show desired printing suitabiliy to polyvinyl chloride. However, when such an ink-jet ink is employed over an extended period of time, the ink-jet heads result in abnormality, whereby it gradually becomes impossible to form normal images. It is assumed that abnormality of ink-jet heads during use of an extended period is due to swelling and dissolution of constituting components and adhesive agents of ink-jet heads via solvents such as N-methylpyrrolidone and amide. It is possible to retard the above swelling and dissolution by decreasing the content of these solvents in the ink-jet ink, while printing aptitude to polyvinyl chloride becomes insufficient. At present, no ink-jet ink is available which satisfies both desired printing suitability onto polyvinyl chloride and long durability of ink-jet heads.

The inventors of the present invention diligently investigated various solvents and combinations. As a result, by incorporating into an ink solvent (A), which was 1,3-dimethyl-2-imidazolidinone, and solvent (B) composed of at least one of the compounds selected from the group consisting of Formulas (1) and (2) described below, in a predetermined amount of each cited compound, it was discovered that it was possible to realize an ink-jet ink which satisfied both printing suitability (quick drying and abrasion resistance) and long stability of ink-jet heads, excelled in ejection stability and safety, and resulted in no odor problem.

The constitution of the ink-jet ink of the present invention will now be specifically described.

The nonaqueous ink jet ink (hereinafter also referred to as the ink-jet ink or the ink) of the present invention is characterized in that 1,3-dimethyl-2-imidazolidinone is incorporated in an amount of 3 - 15% by weight. The content of solvent (A) is preferably 5 - 10% by weight. When the content of solvent (A) is less than 3% by weight, abrasion resistance to polyvinyl chloride becomes insufficient, while when it exceeds 15% by weight, the ink-jet head tends to result in abnormality due to the extended use. In the present invention, "nonaqueous ink-jet inks" refer to inks which incorporate substantially no water.

The ink-jet ink of the present invention is characterized in that solvent (B) composed of at least one compound, selected from the group of compounds represented by aforesaid Formulas (1) and (2), is incorporated in an amount of 50 - 90% by weight.

In aforesaid Formula (1), R¹ is a methyl group or an ethyl group, R² is a methyl group or an ethyl group, and OX¹ is an oxyethylene group or an oxypropylene group.

Further, in aforesaid Formula (2), R¹ is a methyl group or an ethyl group, R² is a methyl group or an ethyl group, and OX¹ is an oxyethylene group or an oxypropylene group.

Specific compounds represented by Formulas (1) and (2), according to the present invention, include diethylene glycol dimethyl ether, diethylene glycol diethyl ether, dipropylene glycol dimethyl ether, dipropylene glycol diethyl ether, ethylene glycol diacetate, and propylene glycol diacetate. Of these, it is preferable that at least the compound represented by Formula (1) is incorporated as a component of solvent (B). By doing so, it is possible to enhance rapid drying of the ink printed onto polyvinyl chloride. Further, in terms of ejection stability, it is preferable that at least one compound selected from diethylene glycol diethyl ether, dipropylene glycol dimethyl ether, dipropylene glycol diethyl ether, ethylene glycol diacetate, and propylene glycol diacetate is incorporated as a component of solvent (B).

Further, it is preferable that solvent (B) incorporates at least both diethylene glycol diethyl ether and ethylene glycol diacetate. The content ratio is preferably 1 : 1 - 10 : 1. By regulating the above constitution, it is possible to achieve quicker drying during printing onto polyvinyl chloride and also enhanced ejection stability, and in addition to further decrease any unpleasant odor of inks.

The ink-jet ink of the present invention may incorporate solvents, other than above solvents (A) and (B), in a range which does not adversely affect the targeted object of the present invention. Examples of the above solvents include alkylene glycol monoalkyl ethers such as diethylene glycol monoethyl ether, triethylene glycol monomethyl ether, dipropylene glycol monomethyl ether, or tripropylene glycol monomethyl ether; alkylene glycol dialkyl ethers such as ethylene glycol dibutyl ether or tetraethylene glycol dimethyl ether; and alkylene glycol monoalkyl ether acetates such as ethylene glycol monobutyl ether acetate.

The ink-jet ink of the present invention is characterized in incorporating pigments. By employing pigments, as a colorant, in the ink-jet ink of the present invention, it is possible to enhance the weather resistance of materials recorded on polyvinyl chloride.

Conventional prior art pigments may be employed in the present invention without particular limitation. For example, preferably employed may be organic pigments such as an insoluble pigment or a lake pigment, as well as inorganic pigments such as carbon black.

Insoluble pigments are not particularly limited, and preferred examples thereof include azo, azomethine, methine, diphenylmethane, triphenylmethane, quinacridone, anthraquinone, perylene, indigo, quinophtharone, isoindolinone, isoindoline, azine, oxazine, thiazine, dioxazine, thiazole, phthalocyanine, and diketopyrrolopyrrole.

Specific pigments which are preferably employable include the following:
Examples of pigments for magenta or red include C.I. Pigment Red 2, C.I. Pigment Red 3, C.I. Pigment Red 5, C.I. Pigment Red 6, C.I. Pigment Red 7, C.I. Pigment Red 12, C.I. Pigment Red 15, C.I. Pigment Red 16, C.I. Pigment Red 48 (Ca), C.I. Pigment Red 48 (Mn), C.I. Pigment Red 48 : 1, C.I. Pigment Red 53 : 1, C.I. Pigment Red 57 (Ca), C.I. Pigment Red 57 : 1, C.I. Pigment Red 112, C.I. Pigment Red 122, C.I. Pigment Red 123, C.I. Pigment Red 139, C.I. Pigment Red 144, C.I. Pigment Red 149, C.I. Pigment Red 166, C.I. Pigment 168, C.I. Pigment Red 177, C.I. Pigment Red 178, C.I. Pigment Red 184, C.I. Pigment Red 202, C.I. Pigment Red 209, C.I. Pigment Red 222, C.I. Pigment Red 254, and C.I. Pigment Violet 19.
Examples of pigments for orange or yellow include C.I. Pigment Orange 31, C.I. Pigment Orange 43, C.I. Pigment Yellow 1, C.I. Pigment Yellow 2, C.I. Pigment Yellow 3, C.I. Pigment Yellow 12, C.I. Pigment Yellow 13, C.I. Pigment Yellow 14, C.I. Pigment Yellow 15, C.I. Pigment Yellow 15 : 3, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 109, C.I. Pigment Yellow 110, C.I. Pigment Yellow 114, C.I. Pigment Yellow 120, C.I. Pigment Yellow 128, C.I. Pigment Yellow 129, C.I. Pigment Yellow 130, C.I. Pigment Yellow 138, C.I. Pigment Yellow 147, C.I. Pigment Yellow 150, C.I. Pigment Yellow 151, C.I. Pigment Yellow 154, C.I. Pigment Yellow 155, C.I. Pigment Yellow 180, C.I. Pigment Yellow 185, C.I. Pigment Yellow 213, and C.I. Pigment Yellow 214.
Examples of pigments for green or cyan include C.I. Pigment Blue 1, C.I. Pigment Blue 2, C.I. Pigment Blue 3, C.I. Pigment Blue 15, C.I. Pigment Blue 15 : 2, C.I. Pigment Blue 15 : 3, C.I. Pigment Blue 15 : 4, C.I. Pigment Blue 16, C.I. Pigment Blue 22, C.I. Pigment Blue 60, and C.I. Pigment Green 7.

Other than the above, when green, blue, and intermediate colors are necessitated, it is preferable to employ the following pigments individually or in combination, and examples thereof include:
C.I. Pigment Red 209, 224, 177, and 194;
C.I. Pigment Orange 43;
C.I. Vat Violet 3;
C.I. Pigment Violet 19, 23, and 37;
C.I. Pigment Green 36 and 7; and
C.I. Pigment Blue 15 : 6.

Further, examples of pigments for black include C.I. Pigment Black 1, C.I. Pigment Black 6, and C.I. Pigment Black 7.

The content of these pigments in the ink of the present invention is preferably regulated to be 2 - 10% by weight. Further, in order to minimize the granular feel of images, light inks may be employed. In such cases, the content of pigments is preferably regulated to be 1/5 - 1/2 with respect to the dark color ink.

It is preferable that pigments according to the present invention are employed in such a way that they are dispersed via a homogenizer together with dispersing agents and other additives necessary for achieving various desired characteristics. Employable homogenizers include a ball mill, a sand mill, an attritor, a roller mill, an agitator, a Henschel mixer, a colloid mill, an ultrasonic homogenizer, a pearl mill, a wet system jet mill, and a paint shaker, all of which are known in the art.

The average particle diameter of pigment dispersions employed in the ink of the present invention is preferably 10 - 200 nm, but is more preferably 50 - 150 nm. By regulating the average particle diameter to be at least 10 nm, aggregation among pigment particles themselves tends to be absent. By regulating the average particle diameter to be at most 200 nm, it is easier to retard the phenomena in which during extended storage, pigments precipitate out. By regulating the average particle diameter to be within the above range, it tends to prepare inks which exhibit desired storage stability.

It is possible to determine the particle diameter of pigment dispersions via a light scattering method, an electrophoretic method, or a laser Doppler method. Further, at least 100 particles are imaged via a transmission type electron microscope. The resulting images are statistically processed by employing image analysis software such as IMAGE-PRO (produced by Media Cybernetics, Inc.), whereby it is possible to determine the particle diameter.

As pigment dispersing agents, employed may be surface active agents and polymer dispersing agents, the latter of which is preferred. As polymer dispersing agents, listed may be (meth)acryl based resins, styrene-(meth)acryl based resins, hydroxyl group containing carboxylic acid esters, salts of long chain polyaminoamides with high molecular weight acid esters, high molecular weight polycarboxylic acid salts, salts of long chain polyaminoamides with polar acid esters, high molecular weight unsaturated acid esters, modified polyurethane, modified polyacrylates, polyether ester type anionic active agents, naphthalenesulfonic acid formalin condensation product salts, aromatic sulfonic acid formalin condensation product salts, polyoxyethylene alkyl phosphoric acid esters, polyoxyethylene nonyl phenyl ether, stearylamine acetate, and pigment derivatives.

Specifically listed are JOHNCRYL (produced by Johnson Polymer), ANTI-TERRA-U (produced by BYK Chemie GmbH), DISPERBYK (produced by BYK Chemie GmbH), EFKA (produced by Efka Chemicals V. B.), FLORENE (produced by Kyoeisha Chemical Co. Ltd.), DISPARON (Kusumoto Chemicals, Ltd.), AJISPAR (produced by Ajinomoto FineTechno, Inc.), DEMOL (produced by Kao Corp.), HOMOGENOL and EMULGEN (both produced by Kao Corp.), SOLSPERSE (produced by Avicia, Ltd.), and NIKKOL (produced by Nikko Chemicals, Ltd.).

The content of dispersing agents in the ink-jet ink of the present invention is preferably 10 - 200% by weight with respect to the pigments. By realizing at least 10% by weight, stability of the pigment dispersion is enhanced, while by realizing at most 200% by weight, ink ejection from ink-jet heads tends to stabilize.

In order to enhance fixability during recording onto polyvinyl chloride, various resins may be incorporated into the ink-jet ink of the present invention. Resins to be added include acryl based resins, polyester based resins, polyurethane based resins, vinyl chloride based resins, and vinyl chloride-vinyl acetate copolymer resins.

Specifically listed are acryl based resins such as JOHNCRYL (produced by Johnson Polymer), or ESULEX P (produced by Sekisui Chemical Co., Ltd.); polyester based resins such as ELITEL (produced by Unitika, Ltd.), or VYLON (produced by Toyobo Co., Ltd.; polyurethane based resins such as VYLON UR (produced by Toyobo Co., Ltd.), NT-HIMILAC (produced by Dainichiseika Color & Chemicals Mfg. Co., Ltd.), CRISVON (produced by Dainippon Ink & Chemicals Co., Ltd.), NIPPOLAN (produced by Nippon Polyurethane Industry Co., Ltd.); and vinyl chloride based resins such as SOLBIN produced by Nissin Chemical Industry Co., Ltd.), VINYBRAN (produced by Nissin Chemical Industry Co., Ltd.), SARAN LATEX (produced by Asahi Kasei Chemicals Co., Ltd.), SUMIELITE (produced by Sumitomo Chemical Co., Ltd.), SEKISUI PVC (produced by Sekisui Chemical Co., Ltd.), or UCAR (produced by The Dow Chemical Co.).

The content of these resins in the ink of the present invention is preferably 1 - 10% by weight. By regulating the content to be at least 1% by weight, when recording is carried out on polyvinyl chloride, weather resistance is enhanced, while by regulating the content to be at most 10% by weight, ink ejection from ink-jet heads tends to stabilize.

In the present invention, other than those described above, if desired, appropriately selected and employed may be various conventional additives such as a viscosity controlling agent, a specific resistance controlling agent, a film forming agent, a UV absorber, an antioxidant, a mildewcide, or an anticorrosive agent to improve ejection stability, compatibility with print heads, ink cartridges, storage stability, and image lasting quality, as well as other various capabilities.

An Ink-jet head, which ejects the ink-jet ink of the present invention and is employed to form images, may be either an on-demand system or a continuous system. Further, employed as an ejection system may be an electrical-mechanical conversion system (for example, a single cavity type, a double cavity type, a vendor type, a piston type, a share mode type, and a shared wall type), an electrical-thermal conversion system (for example, a thermal ink-jet type, a BUBBLE JET (being a registered trade name) type).

In an ink-jet recording method which employs the ink-jet ink of the present invention, ink-jet recording images are produced, for example, by ejecting ink from the ink-jet head based on digital signals, followed by adhesion onto a recording medium, while employing a printer loaded with the ink-jet ink. In order to realize quick and assured drying of the ink adhered onto the recording medium, a method is preferred in which images are formed by raising the surface temperature of the recording media. The above surface temperature is regulated depending on the durability of the recording medium and drying capability of employed inks, but the temperature is preferably 40 - 100 °C. Specifically, when polyvinyl chloride is employed as a recording medium, it is more preferable that, since wettability of the ink onto the surface of the recording medium is enhanced by raising the surface temperature, recording is carried out at a relatively high surface temperature. Since wettability and ink drying capability may occasionally vary depending on a brand, the surface temperature may be regulated based on characteristics of each medium.

When recording is carried out by elevating the surface temperature of recording media, it is preferable to install a heater in the ink-jet recording apparatus. By heating recording media prior to conveyance or during conveyance, it is possible to regulate the surface temperature of recording media by employing only an ink recording apparatus.

It is characterized that as a recording medium employed in the ink-jet recording method of the present invention, polyvinyl chloride is employed. Specific examples of recording media composed of polyvinyl chloride include SOL-371G, SOL-373M, SOL-4701 (all produced by VIGteQnos Corp.), KOTAKU ENBI (produced by System Graphy Co., Ltd.), KSM-VS, KSM-VST, and KSM-VT (all produced by Kimoto Co., Ltd.), J-CAL-HGX, J-CAL-YHG, and J-CAL-WWWG (all produced by Kyosho Osaka Co., Ltd.), BUS MARK V400 F VINYL and LITECAL V-600F VINYL (all produced by Flexcon Co.), FR2 (produced by Hanwha Corp.), LLBAU13713 and LLSP20133 (all produced by Sakurai Co., Ltd.), P-370B and P-400M (all produced by Kanbo Pras Corp.), S02P, S12P, S13P, S14P, S22P, S24P, S34P, and S27P (all produced by Grafityp Co.), P-223RW, P-224RW, P-249ZW, and P-284ZC (all produced by Lintec Corp.), LKG-19, LPA-70, LPE-248, LPM-45, LTG-11, LTG-21 (all produced by Sinseisha Co., Ltd.), MPI3023 (produced by Toyo Corp.), NAPOLEON GLOSS KOTAKU ENBI (produced by Niki Electronics Co., Ltd.) JV-610 and Y-114 (all produced by IKC Co., Ltd.), NIJ-CAPVC, and NIJ-SPVCGT (both produced by Nichie Co., Ltd.), 3101/H12/P4, 3104/H12/P4, 3104/H12/P4S, 9800/H12/P4, 3100/H12/R2, 3101/H12/R2, 3104/H12/R2, 1445/H14/P3, and 1438/ONE WAY VISION (all produced by Inetrcoat Co.), JT5129PM, JT5728P, JT5822P, JT5829P, JT5829R, JT5729PM, JT5829RM, and JT5929PM (all produced by Mactac Co.), MPI1005, MPI1900, MPI2000, MPI2001, MPI2002, MPI3000, MPI3021, MPI3500, and MPI3501 (all produced by Avery Co.), AM-101G and AM-501G (both produced by Gin-Ichi Co., Ltd.), FR2 (produced by Hanwha Japan Co., Ltd.), AY-15P, AY-60P, AY-80P, DBSP137GGH, and DBSP137GGL (all produced by Insight Co.), SJT-V200F and SJT-V400F-1 (both produced by Hiraoka & Co., Ltd.), SPS-98, SPSM-98, SPSH-98, SVGL-137, SVGS-137, MD3-200, MD3-301M, MD5-100, MD5-101M, and MD5-105 (all produced by Metamark Co.), 640M, 641G, 641M, 3105M, 3105SG, 3162G, 3164G, 3164M, 3164XG, 3164XM, 3165G, 3165SG, 3165M, 3169M, 3451SG, 3551G, 3551M, 3631, 3641M, 3651G, 3651M, 3651SG, 3951G, and 3641M (all produced by Orafol Co.), SVTL-HQ130 (Lamy Corp.), and SP300 GWF, SPCLEARAD VINYL (all produced by Catalina Co.), RM-SJR (produced by Ryoyoshiji Co., Ltd.), HI LUCKY and NEW LUCKY PVC (produced by LG Co.), SIY-110, SIY-310, and SIY-320 (all produced by Sekisui Chemical Co., Ltd.), PRINT MI FRONTLIT and PRINT XL LIGHT WEIGHT BANNER (both produced by Endutex Co.), RIJET 100, RIJET 145, and RIJET 165 (all produced by Ritrama Co.), NM-SG and NM-SM (both produced by Nichieikakoh Co., Ltd.), LTO3GS (produced by Lukio Co., Ltd.), EASY PRINT 80 and PERFORMANCE PRINT 80 (both produced by Jet Graph Co., Ltd.), DSE 550, DSB 550, DSE 800G, DSE 802/137, V250WG, V300WG, and V350WG (all produced by Hexis Co.), and DIGITAL WHITE 6005PE and 6010PE (both produced by Multifix Co.).

### EXAMPLES

The present invention will now be detailed with reference to examples, however the present invention is not limited thereto. "Parts" or "%" is employed in the examples, and represents "parts by weight" or "% by weight" respectively, unless otherwise specified.

Further, pigment dispersing agents and fixing resins described below were subjected to removal of low boiling point solvents via reduced pressure distillation and were employed by diluting to result in 20% by weight solids via organic solvents employed for dispersing. In the examples, the employed amount of pigment dispersing agents and fixing resins is represented by the value corresponding to solids. «Preparation of Inks»

### (Preparation if Ink 1)

### <Preparation of Pigment Dispersion 1>

A mixture of 20 parts of Pigment Red 122, 10 parts of DISPERBYK-161 (produced by Big Chemie Japan Co.) as a pigment dispersing agent, 7.8 parts of 1,3-dimethyl-2-imidazolidinone, and 62.2 parts of propylene glycol diacetate was dispersed via a horizontal bead mill (SYSTEM ZETA MINI, produced by Ashizawa Fineteck Ltd.) loaded with 0.5 mm diameter zirconia beads at a volume ratio of 60%, followed by removal of the zirconia beads, whereby Pigment Dispersion 1 was prepared.

### <Preparation of Inks>

After mixing above Pigment Dispersion 1, 1,3-dimethyl-2-imidazolidinone, propylene glycol diacetate, and a fixing resin (VYLON UR8300, produced by Toyobo Co., Ltd.) so that each component reached the amount described in Table 1, the resulting ink was filtered via a 0.8 µm filter, whereby Ink 1 was prepared.

### (Preparation of Inks 2 - 28)

Inks 2 - 28 were prepared in the same manner as above Ink 1, except that the constitution of each of the solvents, fixing resins and pigments was changed as described in Table 1. The pigment dispersion was prepared in such a manner that 20 parts of the pigment and 10 parts of the pigment dispersing agent were employed in the same manner as Example 1, the residual amount was diluted via solvents having the same constitution as the ink, and dispersion was similarly carried.

Table 1 shows the constitution of each ink prepared as described above. The value of each additive described in Table 1 represents % by weight in the ink.

**Table 1**

| Ink No. | Component (A) | Component (B) | | | | Other Solvent | | | | Fixing Resin | Dispersing Agent | Pigment | | Remarks |
|---|---|---|---|---|---|---|---|---|---|---|---|---|---|---|
| | DMI | Solvent 1 | | Solvent 2 | | Solvent 1 | | Solvent 2 | | | | Type | *1 | |
| | | Type | *1 | Type | *1 | Type | *1 | Type | *1 | | | | | |
| 1 | 10 | PGDAc | 80 | - | - | - | - | - | - | 4 | 2 | PR122 | 4 | Inv. |
| 2 | 8 | EGDAc | 82 | - | - | - | - | - | - | 4 | 2 | PR122 | 4 | Inv. |
| 3 | 6 | DEGDME | 84 | - | - | - | - | - | - | 4 | 2 | PY150 | 4 | Inv. |
| 4 | 5 | DPGDEE | 85 | - | - | - | - | - | - | 4 | 2 | PB15:3 | 4 | Inv. |
| 5 | 10 | DPGDME | 80 | - | - | - | - | - | - | 4 | 2 | CB | 4 | Inv. |
| 6 | 7 | DEGDEE | 83 | - | - | - | - | - | - | 4 | 2 | PB15:3 | 4 | Inv. |
| 7 | 5 | DEGDEE | 40 | EGDAc | 45 | - | - | - | - | 4 | 2 | PY150 | 4 | Inv. |
| 8 | 10 | DEGDEE | 73 | EGDAc | 7 | - | - | - | - | 4 | 2 | CB | 4 | Inv. |
| 9 | 3 | DEGDEE | 70 | EGDAc | 17 | - | - | - | - | 4 | 2 | PR122 | 4 | Inv. |
| 10 | 4 | DEGDEE | 50 | EGDAc | 26 | TEGDME | 10 | - | - | 4 | 2 | PB15:3 | 4 | Inv. |
| 11 | 15 | DEGDEE | 65 | EGDAc | 10 | - | - | - | - | 4 | 2 | CB | 4 | Inv. |
| 12 | 11 | DEGDEE | 45 | EGDAc | 21 | TEGDME | 8 | DEGDBE | 5 | 4 | 2 | PY150 | 4 | Inv. |
| 13 | 13 | DEGDEE | 37 | EGDAc | 15 | DEGDBE | 25 | - | - | 4 | 2 | PR122 | 4 | Inv. |
| 14 | 10 | DEGDEE | 65 | EGDAc | 15 | - | - | - | - | 4 | 2 | PY150 | 4 | Inv. |
| 15 | 8 | DEGDEE | 35 | EGDAc | 35 | TEGDME | 12 | - | - | 4 | 2 | PR122 | 4 | Inv. |
| 16 | 5 | DEGDEE | 70 | EGDAc | 7 | DEGDBE | 8 | - | - | 4 | 2 | PB15:3 | 4 | Inv. |
| 17 | 6 | DEGDEE | 64 | EGDAc | 20 | - | - | - | - | 4 | 2 | CB | 4 | Inv. |
| 18 | 2 | DEGDEE | 60 | EGDAc | 10 | TEGDME | 18 | - | - | 4 | 2 | PB15:3 | 4 | Comp. |
| 19 | - | DEGDEE | 50 | EGDAc | 40 | - | - | - | - | 4 | 2 | PR122 | 4 | Comp. |
| 20 | 16 | DEGDEE | 50 | EGDAc | 4 | TEGDME | 10 | DEGDBE | 10 | 4 | 2 | PY150 | 4 | Comp. |
| 21 | 20 | DEGDEE | 55 | EGDAc | 15 | - | - | - | - | 4 | 2 | CB | 4 | Comp. |
| 22 | 8 | EGDAc | 48 | - | - | DPGMEAc | 34 | - | - | 4 | 2 | CB | 4 | Comp. |
| 23 | 8 | - | - | - | - | DPGME | 82 | - | - | 4 | 2 | PY150 | 4 | Comp. |
| 24 | 8 | - | - | - | - | EGBEAc | 82 | - | - | 4 | 2 | PB15:3 | 4 | Comp. |
| 25 | - | - | - | - | - | EGBEAc | 70 | NMP | 20 | 4 | 2 | PY150 | 4 | Comp. |
| 26 | - | DPGDME | 15 | - | - | DPGMEAc | 60 | NMP | 15 | 4 | 2 | PR122 | 4 | Comp. |
| 27 | - | DPGDME | 20 | - | - | DEGDBE | 65 | NMP | 5 | 4 | 2 | PB15:3 | 4 | Comp. |
| 28 | - | PGDAc | 17 | - | - | DPGMEAc | 70 | NMP | 3 | 4 | 2 | CB | 4 | Comp. |

| | | | | | | | | | | | | | | |
|---|---|---|---|---|---|---|---|---|---|---|---|---|---|---|
| *1: Content (%), Inv.: Present Invention, Comp.: Comparative Example | | | | | | | | | | | | | | |

Each of the additives described via abbreviation in above Table 1 is detailed below.
(Component (A))
   DMI: 1,3-dimethyl-2-imidazolidinone
(Component B))
   DEGDEE: diethylene glycol diethyl ether
   EGDAc: ethylene glycol diacetate
   DPGDME: dipropylene glycol dimethyl ether
   DEGDME: diethylene glycol dimethyl ether
   DPGDEE: dipropylene glycol diethyl ether
   PGDAc: propylene glycol diacetate
(Other Solvents)
   EGBEAc: ethylene glycol monobutyl ether acetate
   TEGDME: tetraethylene glycol dimethyl ether
   DEGDBE: diethylene glycol dibutyl ether
   DPGME: dipropylene glycol monomethyl ether
   DPGMEAc: dipropylene glycol monomethyl ether acetate
   NMP: N-methylpyrrolidone
(Pigments)
   PY150; C.I. Pigments Yellow 150
   PR122; C.I. Pigment Red 122
   PB15 : 3; C.I. Pigment Blue 15 : 3
   CB; carbon black

### <<Evaluation of Ink Characteristics>>

### (Evaluation of Ejectability)

By employing a piezoelectric head of a 28 µm nozzle aperture, a driving frequency of 15 kHz, 512 nozzles, a minimum droplet volume of 14 pl, and a nozzle density of 180 dpi (dpi represents the number of dots per 2.54 cm), as well as the strobe light emission system ink ejection state observing device, described in Fig. 2 of JP-A No. 2002-363469, the ejection state of each ink was monitored via a CCD camera in which the ejection cycle and the light emission cycle were synchronized. In an ambience of 23 °C and 55% relative humidity, ejectability was evaluated based on the following criteria. Performance of B or better was considered to be commercially viable.
A: ink droplets were ejected normally, and when re-ejection was carried out after termination of the ejection for one minute, no abnormality, such as deflection, non-ejection, or rate fluctuation, was noted
B: ink droplets were ejected normally, but when re-ejection was carried out after termination of the ejection for one minute, some nozzles resulted in deflection and rate fluctuation
D: normal ejection of ink droplets was difficult, some nozzles resulted in deflection, and when re-ejection was carried out after termination of ejection for one minute, many nozzles resulted in deflection, rate fluctuation, and further non-ejection

### (Evaluation of Unpleasant Odor Resistance)

Each of Inks 1 - 28 was placed in separate 500 ml polyethylene bottles to fill each to approximately half, and odor was sensed by 10 examiners. Nearly no odor was graded to be a 5, while highly unpleasant odor was graded to be a 1, resulting in 5 rankings. Unpleasant odor resistance was rated based on the following criteria. Performance of C or better was considered to be commercially viable.
A: the average of the 10 examiners was at least 4
B: the average of the 10 examiners was at least 3 - less than 4
C: the average of the 10 examiners was at least 2 - less than 3
D: the average of the 10 examiners was less than 2

### <<Evaluation of Formed Images>>

### (Image Formation)

Each ink was placed in an on-demand type ink-jet printer, loaded with a piezoelectric head of 28 µm nozzle aperture, a driving frequency of 15 kHz, 512 nozzles, a minimal droplet volume of 14 pl, and a nozzle density of 180 dpi, as well as a heater at a maximum recording density of 1440 x 1440 dpi. Subsequently, each ink was ejected and a solid color image was recorded onto 10 cm x 10 cm JT5929PM (produced by Mactac Co.) as a polyvinyl chloride recording medium. Further, the heater temperature was set so that during printing, the surface temperature of the recording medium reached 45 °C by heating its rear surface. The surface temperature of recording media was determined employing non-contact thermometer (IT-530N Shape, produced by Horiba Ltd.).

### Evaluation of Images

Each of the images prepared via Inks 1 - 28 based on the above method, was evaluated via the following method. Performance of C or better was considered to be commercially viable.

### <Evaluation of Quick Drying>

After recording images onto polyvinyl chloride, the resulting solid image was rubbed with fingers, and quick drying was evaluated based on the following criteria.
A: the time duration which enabled no removal of the image by rubbing with fingers was less than 3 minutes immediately after image recording
B: the time duration which enabled no removal of the image by rubbing with fingers was at least 3 - less than 4 minutes immediately after image recording
C: the time duration which enabled no removal of the image by rubbing with fingers was at least 4 minutes - less than 5 minutes immediately after image recording
D: the time duration which enabled no removal of the image by rubbing with fingers was at least 5 minutes immediately after image recording

### <Evaluation of Image Abrasion Resistance>

Images recorded onto polyvinyl chloride were rubbed with dried absorbent cotton, and image abrasion resistance was evaluated.
A: image density resulted in almost no change after rubbing at least 50 times
B: image density was decreased after rubbing 20 - 50 times
D: image density was decreased after rubbing less than 20 times

### <<Evaluation of Long-Period Durability of Head>>

Twenty eight of the above ink-jet recording apparatuses were prepared and one of Inks 1 - 28 was loaded into each apparatus. The aforesaid image formation was carried out every day for 12 hours per day. After 6 months, formed images were evaluated, whereby the long-period durability of each of the ink-jet heads was evaluated. B or better was considered to be commercially viable performance.
A: any individual image after 6 months was almost identical to the initial image, and the ink-jet head exhibited no deterioration
B: any individual image after 6 months exhibited slight white streaks and partial deterioration of the ink-jet head was noted
D: any individual image after 6 months exhibited many white streaks and the ink-jet head was significantly deteriorated

Table 2 shows the results.

**Table 2**

| Ink No. | Ejectability | Unpleasant Odor Resistance | Quick Drying | Abrasion Resistance | Long-Period Durability of Head | Remarks |
|---|---|---|---|---|---|---|
| 1 | A | C | C | A | A | Inv. |
| 2 | A | C | C | A | A | Inv. |
| 3 | B | C | A | A | A | Inv. |
| 4 | A | C | A | A | A | Inv. |
| 5 | A | C | A | A | A | Inv. |
| 6 | A | C | A | A | A | Inv. |
| 7 | A | B | B | A | A | Inv. |
| 8 | A | B | A | A | A | Inv. |
| 9 | A | A | B | B | A | Inv. |
| 10 | A | A | B | B | A | Inv. |
| 11 | A | A | A | A | B | Inv. |
| 12 | A | A | A | A | B | Inv. |
| 13 | A | A | A | A | B | Inv. |
| 14 | A | A | A | A | A | Inv. |
| 15 | A | A | A | A | A | Inv. |
| 16 | A | A | A | A | A | Inv. |
| 17 | A | A | A | A | A | Inv. |
| 18 | A | B | C | D | A | Comp. |
| 19 | A | C | D | D | A | Comp. |
| 20 | A | C | A | A | D | Comp. |
| 21 | A | B | A | A | D | Comp. |
| 22 | B | C | D | B | A | Comp. |
| 23 | A | D | D | D | A | Comp. |
| 24 | B | D | D | B | B | Comp. |
| 25 | D | D | B | A | D | Comp. |
| 26 | B | C | B | A | C | Comp. |
| 27 | B | C | C | B | D | Comp. |
| 28 | B | C | D | D | B | Comp. |

| | | | | | | |
|---|---|---|---|---|---|---|
| Comp.: Comparative Example, Inv.: Present Invention | | | | | | |

As can clearly be seen from the results shown in Table 2, inks, which were constituted as specified in the present invention, excelled in all characteristics including ink ejectability, unpleasant odor resistance, quick drying when images were recorded onto polyvinyl chloride as a recording medium, and long-period durability of ink-jet heads, compared to the comparative examples.

## Claims

1. A nonaqueous ink-jet ink comprising at least solvents (A) and (B), a pigment, and a polymer compound,
wherein a content of solvent (A) is 3 - 15% by weight based on the total weight of the ink-jet ink, and a content of solvent (B) is 50 - 90% by weight:
Solvent (A): 1,3-dimethyl-2-imidazolidinone
Solvent (B): a solvent comprising at least one compound selected from the group consisting of compounds represented by Formulas (1) and (2):
Formula (1) **R¹-(OX¹)₂-O-R²**
wherein R¹ is a methyl group or an ethyl group, R² is a methyl group or an ethyl group, and OX¹ is an oxyethylene group or an oxypropylene group; 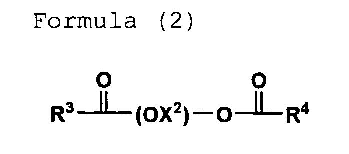 wherein R³ is a methyl group or an ethyl group, R⁴ is a methyl group or an ethyl group, and OX² is an oxyethylene group or an oxypropylene group.

2. The nonaqueous ink-jet ink described in claim 1,
wherein the content of solvent (A) is 5 - 10% by weight based on the total weight of the ink-jet ink.

3. The nonaqueous ink-jet ink described in claim 1 or 2,
wherein solvent (B) incorporates at least the compound represented by Formula (1).

4. The nonaqueous ink-jet ink described in any one of claims 1 - 3,
wherein solvent (B) incorporates at least one selected from the group consisting of diethylene glycol diethyl ether, dipropylene glycol dimethyl ether, dipropylene glycol diethyl ether, ethylene glycol diacetate, and propylene glycol diacetate.

5. The nonaqueous ink-jet ink described in any one of claims 1 - 4,
wherein solvent (B) incorporates at least diethylene glycol diethyl ether and ethylene glycol diacetate.

6. The nonaqueous ink-jet ink described in claim 5,
wherein the content ratio of diethylene glycol diethyl ether to ethylene glycol diacetate is 1 : 1 - 10 : 1.

7. An ink-jet recording method comprising the step of:
ejecting the nonaqueous ink-jet ink described in any one of claims 1 - 6 onto polyvinyl chloride as a recording medium.
